# EUROPEAN PATENT APPLICATION

(11) **EP 4 748 656 A1**
(43) Date of publication of application: **27.05.2026**
(21) Application number: 24842210.7
(22) Date of filing: 05.07.2024
(51) Int. Cl.: B60R 22/46

(54) **PISTON, SEAT BELT RETRACTOR AND PRETENSIONING SEAT BELT**

(30) Priority: 20.07.2023 CN 202310896466
(71) Applicant: Yanfeng International Automotive Technology Co., Ltd., Shanghai 201306 (CN)
(72) Inventor: GUO, Xin, Shanghai 201315 (CN); ZHAO, Wei, Shanghai 201315 (CN); HUANG, Yongliang, Shanghai 201315 (CN)
(74) Representative: Reitstötter Kinzebach
(86) International application number: PCT/CN2024/103809
(87) International publication number: WO 2025/016215

(57) **Abstract**

The present invention relates to a piston for a pretensioning seatbelt, a seatbelt retractor and a pretensioning seatbelt. The piston comprises: a piston seat comprising a front surface and a first recess recessed from the front surface; and a piston head mounted to a front side of the piston seat and comprising an abutting surface abutting against the front surface, a front side of the piston head being provided with a second recess. The piston is provided with a pressure control mechanism configured to block gas flow from flowing forward when gas pressure on a rear side of the piston seat is less than a preset value; and to form a gas flow passage when the gas pressure on the rear side of the piston seat is greater than or equal to the preset value, the gas flow passage being adapted to deflect the gas flow and allow the gas flow to flow toward the front of the piston. The piston can realize pressure relief under an abnormal working condition while having good sealing characteristics, and is simple in structure, convenient to be manufactured and low in cost.

## Description

### RELATED FIELD

The present invention generally relates to the field of passive safety devices for vehicles and, more particularly, to a piston for a pretensioning seatbelt. The present invention further relates to a seatbelt retractor comprising such a piston, and to a pretensioning seatbelt comprising such a seatbelt retractor.

### BACKGROUND

The gap between a webbing and a person is reduced by a retraction force of a coil spring in a retractor of a non-pretensioning seatbelt, but the reduction of the gap is not enough, and the person's clothing also has a certain thickness, so these gaps will also greatly affect the safety of the vehicle occupant in an emergency situation. With the development of science and technology, the requirements for vehicle occupant protection are constantly increasing, and the demand for pretensioning seat belts is also growing.

For a pretensioning seatbelt, the pretensioning device thereof can be used for instantly tightening the webbing, by using a large force which can be borne by an occupant, through the release of high energy in the retractor immediately before or after the emergency occurs, so that the gap between the webbing and the body of the occupant is further reduced and the occupant is limited to a designed position, thereby forming a cooperating protection with the triggering of an airbag. The basic working principle of the pretensioning device is as follows: when a gas generator is triggered, the generated high-pressure gas flow, by means of a piston and a transmission medium, drives a spool in a seatbelt retractor to rotate so as to achieve the effect of instantly tightening the webbing, thereby inhibiting the occupant on the seat. Meanwhile, under an abnormal working condition, for example, when the gas pressure is too large, in order to protect other components of the pretensioning device, the piston in the pretensioning device can release gas pressure to realize pressure relief.

The patent document WO2017/021494A1 discloses a sealing member with an internal pressure relief function for a seatbelt retractor, wherein a metal piece subassembly is embedded in the sealing member, and the bottom of the sealing member is supported by a metal piece and a pretensioning ball, and the internal pressure relief is realized by breaking a central metal cap. However, the assembly has many parts, complex assembly process and high quality cost.

The patent document EP3059137A1 also discloses a sealing member with an internal pressure relief function for a seatbelt retractor, wherein the internal pressure relief is realized by directly forming a hole in the center of the sealing member, the sealing member and a bottom support element are arranged separately, and the bottom support element is provided with a vent hole. However, the hole has an influence on the strength of the sealing member and also has an influence on the pretensioning performance.

### SUMMARY

The present invention aims to provide a piston for a pretensioning seatbelt to overcome at least one of the drawbacks of the prior art described above. More specifically, the piston can realize pressure relief under an abnormal working condition while having good sealing performance, and is simple in structure, convenient to be manufactured and low in cost.

To this end, a first aspect of the present invention provides a piston for a pretensioning seatbelt, comprising: a piston seat comprising a front surface and a first recess recessed from the front surface; and a piston head mounted to a front side of the piston seat and comprising an abutting surface abutting against the front surface, a front side of the piston head being provided with a second recess adapted to support a transmission member; wherein the piston is provided with a pressure control mechanism configured to block gas flow from flowing forward when gas pressure on a rear side of the piston seat is less than a preset value; and to form a gas flow passage when the gas pressure on the rear side of the piston seat is greater than or equal to the preset value, the gas flow passage being adapted to deflect the gas flow and allow the gas flow to flow toward the front of the piston.

According to an alternative embodiment of the present invention, the piston seat comprises at least one mounting portion protruding from the front surface, and the piston head comprises a mounting groove snap-fitted with the at least one mounting portion.

According to an alternative embodiment of the present invention, the rear side of the piston seat is provided with a third recess comprising a middle portion and an edge portion located outside the middle portion, the middle portion defining a mounting surface adapted to fit against a mounting tool, and the edge portion being recessed from an edge of the mounting surface to form a ring edge adapted to deform radially outward.

According to an alternative embodiment of the present invention, the mounting surface is a curved surface.

According to an alternative embodiment of the present invention, the pressure control mechanism comprises: a first passage inlet recessed from a bottom of the middle portion; a first passage outlet recessed from a bottom of the first recess; and a blocking portion located between the first passage inlet and the first passage outlet, wherein the blocking portion is configured to be broken so as to communicate the first passage inlet to the first passage outlet when the gas pressure in the third recess is greater than or equal to the preset value.

According to an alternative embodiment of the present invention, the pressure control mechanism comprises: a first passage communicating the middle portion to the first recess; and a blocking member arranged in the first passage, wherein the blocking member is configured to close the first passage when the gas pressure in the third recess is less than the preset value, and to be broken so as to open the first passage when the gas pressure in the third recess is greater than or equal to the preset value.

According to an alternative embodiment of the present invention, the pressure control mechanism further comprises at least one second passage delimited by the piston head and configured to direct the gas flow in the first recess from the abutting surface to a side wall surface of the piston head.

According to an alternative embodiment of the present invention, the piston head comprises a supporting portion protruding from the abutting surface and abutting against the first recess, and the pressure control mechanism further comprises at least one second passage delimited by the piston head and configured to direct the gas flow in the first recess from the supporting portion to a side wall surface of the piston head.

According to an alternative embodiment of the present invention, the first recess communicates the front surface to the middle portion, and the piston head comprises a supporting portion protruding from the abutting surface and abutting against an inner wall of the first recess, wherein the pressure control mechanism comprises: a first passage delimited by the supporting portion and configured to be closed when the gas pressure in the third recess is less than the preset value, and to be opened to direct the gas flow from the third recess to the position of the abutting surface when the gas pressure in the third recess is greater than or equal to the preset value; and at least one second passage configured to be communicated with the first passage and to direct the gas flow from the position of the abutting surface to a side wall surface of the piston head.

According to an alternative embodiment of the present invention, the pressure control mechanism is such that an angle between a direction of the gas flow output from the gas flow passage and an axial direction of the piston is between 20 ° and 90 °.

According to an alternative embodiment of the present invention, the piston seat is made of a first plastic material, and the piston head is made of a second plastic material having a hardness greater than that of the first plastic material.

A second aspect of the present invention provides a seatbelt retractor, comprising: a bracket; a spool assembly rotatably mounted to the bracket and comprising a spool adapted to wind a webbing and a gear fixedly connected to the spool; a pretensioning pipe mounted to the bracket; a gas generator mounted in the pretensioning pipe; and at least one piston according to the first aspect of the present invention and at least one transmission member arranged in the pretensioning pipe, the piston being arranged between the gas generator and the transmission member, and the piston seat being in interference fit with an inner wall of the pretensioning pipe, wherein the seatbelt retractor is configured to generate a gas flow when the gas generator is ignited to push the piston and the transmission member to move in the pretensioning pipe, so that the transmission member interacts with the gear and drives the spool to rotate.

A third aspect of the present invention provides a pretensioning seatbelt, comprising the seatbelt retractor according to the second aspect of the present invention.

Compared to the prior art, the piston for a pretensioning seatbelt according to the present invention has a plurality of advantages, in particular: by means of the seatbelt retractor with such piston, the gap between the webbing and the occupant can be quickly tightened in the case of a vehicle collision to restrain the occupant, wherein the energy is fully utilized through the good sealing performance of the piston, the consumption of powder is reduced, and the efficiency of the pretensioning function is improved; meanwhile, the pressure control mechanism is arranged in the piston in a simple and low-cost manner, so that abnormal pressure can be released through the control mechanism to protect other parts of the seatbelt, and flame can be inhibited and gas injection energy can be reduced during release; in addition, the piston is simple in structure, convenient to be mounted and low in cost, making it widely applied to various types of seatbelt retractors.

### BRIEF DESCRIPTION OF THE DRAWINGS

Other features and advantages of the present invention will be readily understood through the following preferred embodiments described in detail with reference to the accompanying drawings, in which a same reference numeral indicates a same or similar component.
FIG. 1 is a perspective view of a seatbelt retractor according to an embodiment of the present invention;
FIG. 2 is a cross-sectional view of the seatbelt retractor in FIG. 1 at the position of a gear of a pretensioning device;
FIG. 3 is a cross-sectional view of a pretensioning pipe of the pretensioning device of the seatbelt retractor in FIG. 1;
FIGs. 4A to 4D are respectively a perspective view, an exploded view, a side view and a cross-sectional view of a piston according to a first embodiment of the present invention;
FIGs. 5A to 5D are respectively a perspective view, an exploded view, a side view and a cross-sectional view of a piston according to a second embodiment of the present invention;
FIGs. 6A to 6D are respectively a perspective view, an exploded view, a side view and a cross-sectional view of a piston according to a third embodiment of the present invention;
FIGs. 7A to 7D are respectively a perspective view, an exploded view, a side view and a cross-sectional view of a piston according to a fourth embodiment of the present invention;
FIGs. 8A to 8D are respectively a perspective view, an exploded view, a side view and a cross-sectional view of a piston according to a fifth embodiment of the present invention.

Elements in the drawings are shown for simplicity and clarity and are not necessarily drawn to precise scale. It is conceivable that the drawings are not only used to explain the present invention, but also help to define the present invention when necessary.

### DETAILED DESCRIPTION

The implementation and usage of the embodiments are discussed in detail below. However, it is conceivable that the specific embodiments discussed herein are merely intended to illustrate specific ways of implementing and using the present invention, and are not intended to limit the protection scope of the present invention.

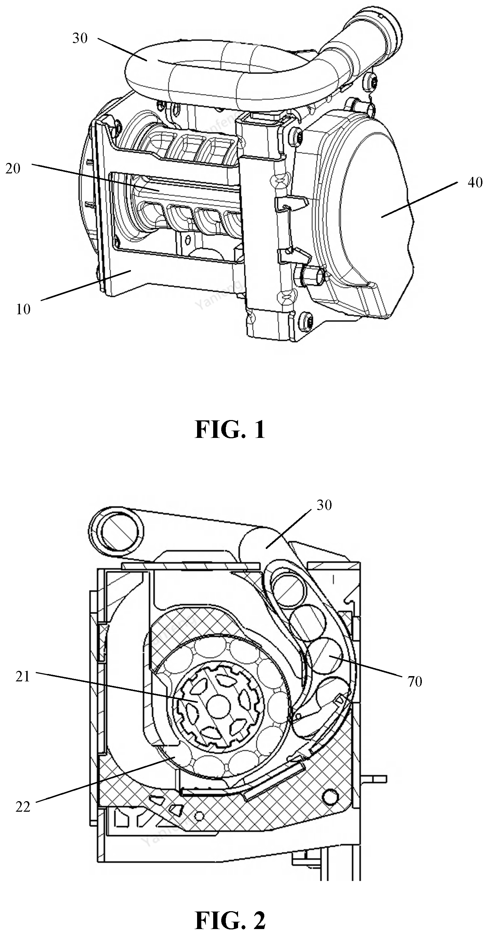

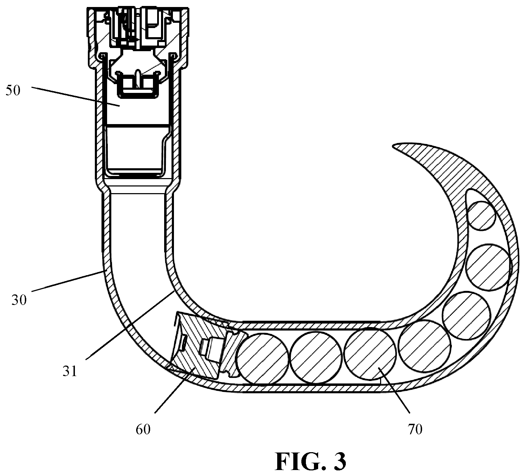

As shown in FIGs. 1-3, the present invention relates to a seatbelt retractor for a pretensioning seatbelt, which mainly comprises a bracket 10, a spool assembly 20, a pretensioning pipe 30, an enclosure 40, a gas generator 50, at least one piston 60 and at least one transmission member, such as a pretensioning ball 70 as shown.

The bracket 10 is, for example, configured as a U-shaped bracket and fixed to a seat of a vehicle. The spool assembly 20 is rotatably mounted to the bracket 10 and comprises a spool 21 adapted to wind a webbing and a gear 22 fixedly connected to the spool 21. For example, one axial end of the spool 21 is provided with a spline shaft, the gear 22 is sleeved on the spline shaft without relative rotation so as to be rotated together with the spool 21, and the teeth portion of the gear 22 has a special-shaped engaging portion mated with the transmission member. The enclosure 40 is mounted on the bracket 10 for covering the axial end of the spool 21.

The pretensioning pipe 30 is mounted to the bracket 10 and is, for example, configured as a serpentine pipe. The gas generator 50 is mounted in the pretensioning pipe 30 at one end of the pretensioning pipe 30, for example by riveting. The piston 60 and the plurality of pretensioning balls 70 serving as transmission members are accommodated and held in the pretensioning pipe 30, and the piston 60 is arranged between the gas generator 50 and the pretensioning balls 70 and is in interference fit with the inner wall 31 of the pretensioning pipe 30. Thus, the pretensioning pipe 30, the gas generator 50, the piston 60, the pretensioning balls 70 and the gear 22 constitute a pretensioning device of the seatbelt retractor.

In the case of an emergency, the gas generator 50 is ignited to generate a high-temperature and high-pressure gas flow, which sequentially pushes the piston 60 and the pretensioning balls 70 to move in the pretensioning pipe 30. The end outlet of the pretensioning pipe 30 opposite to the gas generator 50 is aligned with the teeth portion of the gear 22, so that the pretensioning balls 70 are engaged with the special-shaped engaging portion of the teeth portion of the gear 22 when being ejected from the outlet of the pretensioning pipe 30, thereby driving the gear 22 and the spool 21 to rotate so as to instantly tighten the webbing. The special-shaped engaging portion of the teeth portion of the gear 22 may, for example, be configured as ball sockets to achieve good engagement of the pretensioning balls 70 with the gear 22.

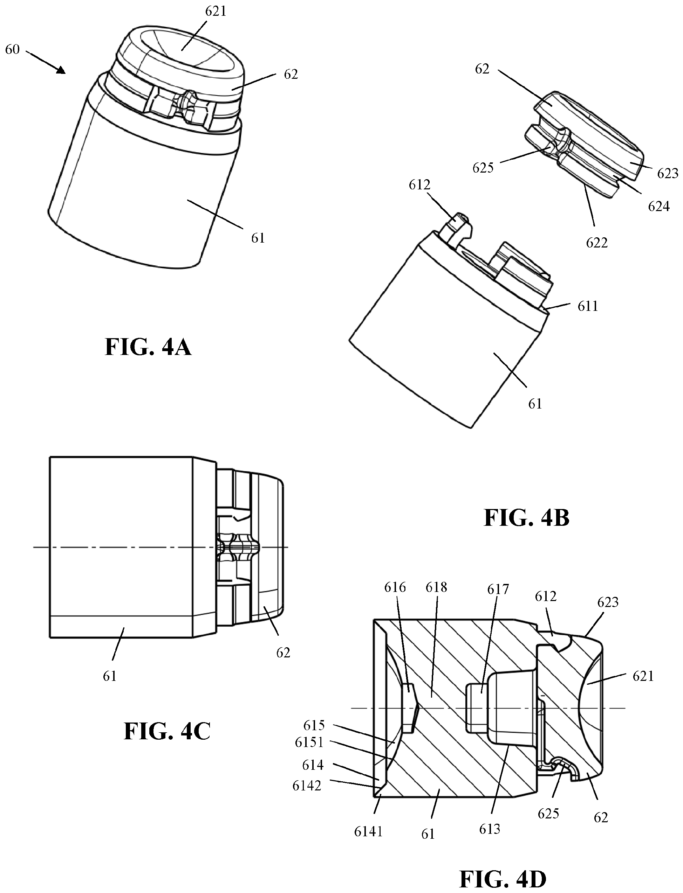

Specific embodiments of the piston 60 are described below with the aid of FIGs. 4A-8D. In the present description, the front side of the piston 60 is the side facing the pretensioning balls 70, and the rear side of the piston 60 is the side facing the gas generator 50. Further, in the present description, "axial direction" and "radial direction" refer to the axial direction and the radial direction of the piston 60, unless otherwise expressly defined.

### First Embodiment

As shown in FIGs. 4A-4D, the piston 60 comprises a piston seat 61 and a piston head 62 mounted to the front side of the piston seat 61. The piston seat 61 may serve as a seal, and more specifically, when the gas generator 50 is ignited, the gas pressure applied to the rear side of the piston seat 61 may deform the piston seat 61 under force to tighten the gap between the piston seat 61 and the inner wall 31 of the pretensioning pipe 30 to achieve a sealing effect.

The front side of the piston seat 61 comprises a front surface 611, a first recess 613 recessed rearwardly from the front surface 611, and at least one mounting portion 612 protruding from the front surface 611, for example, three mounting portions 612 circumferentially and evenly distributed on the front surface 611 as shown. Correspondingly, the piston head 62 comprises an annular mounting groove 624 recessed radially inward from a side wall surface 623 (i.e., the surface facing the inner wall 31 of the pretensioning pipe 30) thereof, so as to be snap-fitted with the protrusion on each mounting portion 612. Therefore, the piston head 62 is fixedly mounted to the front side of the piston seat 61, and an abutting surface 622 (i.e., the rear surface of the piston head 62) of the piston head 62 tightly abuts against the front surface 611 of the piston seat 61. It is conceivable that the above mounting method of the piston seat 61 with the piston head 62 is not limitative, and the shape, position, mounting method, and the like, of the mounting portions of the piston seat 61 and the piston head 62 may be changed according to actual needs.

The front side of the piston head 62 is provided with a second recess 621 adapted to support the transmission member, and the second recess 621 defines, for example, a curved surface for supporting and pushing the pretensioning ball 70, especially a spherical surface having, for example, the spherical feature of 10%-45%, so that the second recess 621 is in surface contact with the pretensioning ball 70. In addition, the curved surface may also be provided with multi-point protrusions, so that the second recess 621 is in multi-point centrosymmetric contact with the pretensioning ball 70. The overall radial dimension of the piston head 62 should account for 20%-100% of the cross-sectional area of the pretensioning pipe 30.

The rear side of the piston seat 61 is provided with a third recess facing the gas generator 50, and the third recess comprises a middle portion 615 and an edge portion 614 located outside the middle portion 615. The middle portion 615 defines a mounting surface 6151 configured as, for example, a curved surface (e.g., a spherical surface or other curved surface) for fitting against a mounting tool. Thus, it is possible to easily allow the mounting tool to hold the piston 60 through the mounting surface 6151 and mount it into the pretensioning pipe 30. The edge portion 614 is recessed outwardly from the edge of the mounting surface 6151 to form a rear ring edge 6141 of the piston 60. Thus, when the piston 60 is mounted, the mounting tool will not come into contact with the ring edge 6141 to cause wear due to the uneven transition between the inner wall surface 6142 of the ring edge 6141 and the mounting surface 6151. In addition, due to the small thickness of the ring edge 6141, when the gas generator 50 is ignited, the gas flow in the third recess of the piston seat 61 can push the ring edge 6141 to expand and deform radially outward, so that the outer wall surface of the ring edge 6141 can fit against the inner wall 31 of the pretensioning pipe 30 more tightly than other outer wall portions of the piston seat 61, thereby further improving the sealing performance. It is conceivable that the inner wall surface 6142 of the ring edge 6141 may be a flat surface or a curved surface, which is not limited in the present invention.

According to the first embodiment, the pressure control mechanism of the piston 60 comprises a first passage inlet 616 recessed forwardly from the bottom of the middle portion 615 of the third recess of the piston seat 61, a first passage outlet 617 recessed rearwardly from the bottom of the first recess 613 of the piston seat 61, and a blocking portion 618 located between the first passage inlet 616 and the first passage outlet 617. More specifically, the first passage inlet 616 and the first passage outlet 617 have a reduced radial dimension compared to the middle portion 615 and the first recess 613 and are separated by the blocking portion 618; the blocking portion 618 itself, as part of the one-piece piston seat 61, constitutes a partition-like structure in the piston seat 61 that can be broken under a preset pressure and temperature. Therefore, when the gas pressure on the rear side of the piston seat 61 (that is, the gas pressure in the third recess) is less than a preset value, the blocking portion 618 can block the gas flow from flowing forward; and when the gas pressure on the rear side of the piston seat 61 is greater than or equal to the preset value, due to the arrangement of the first recess 613, the rear side of the piston seat 61 is prone to undergo radial and inward contraction deformation, and thus the blocking portion 618 can be easily broken to communicate the first passage inlet 616 to the first passage outlet 617, thereby forming the first passage, so that the gas flow on the rear side of the piston seat 61 can reach the first recess 613 through the first passage.

The pressure control mechanism of the piston 60 further comprises at least one second passage 625 delimited by the piston head 62, for example, one to eight second passages 625, the second passages 625 are, for example, grooves formed along the edge of the piston head 62, and the grooves extend from the abutting surface 622 to the side wall surface 623 of the piston head 62, so that the gas flow reaching the first recess 613 is directed from the abutting surface 622 to the side wall surface 623 and is ejected toward the inner wall 31 of the pretensioning pipe 30, and then flows toward the front of the piston 60. In fact, the second passage 625 constitutes an energy dissipation structure of the pressure control mechanism that inhibits the generation of a flame, by deflecting the gas flow output from the first passage to reduce the energy emitted by the gas flow. Preferably, the angle between the direction of the gas flow output from the second passage 625 and impacting on the inner wall 31 of the pretensioning pipe 30 and the axial direction of the piston 60 (i.e., the direction of the gas flow flowing through the first passage) is between 20 ° and 90 °. For example, the second passage 625 may be configured to extend radially along the abutting surface 622 from the center of the abutting surface 622 of the piston head 62 to the outer wall surface 623 thereof, so that the gas flow may vertically impact on the inner wall 31 of the pretensioning pipe 30.

Preferably, the piston seat 61 is made of a first plastic material, for example, a POM (polyoxymethylene resin) material, which not only ensures the interference fit with the pretensioning pipe 30 to obtain a better sealing property, but also enables the blocking portion 618 of the pressure control mechanism to be broken when the gas pressure is too large, thereby ensuring safety; and the piston head 62 is made of a second plastic material having a hardness greater than that of the first plastic material, for example, made of nylon with glass fiber, to ensure the support and energy transfer to the pretensioning ball 70. Certainly, the piston seat 61 and the piston head 62 may also be made of a same material that meets performance requirements, which is not limited in the present invention. In addition, to further inhibit flame generation, the material of the piston seat 61 and/or the piston head 62 may be selected as a flame retardant material, or may comprise a flame retardant composition.

It is conceivable that the specific materials listed above are merely illustrative and are not limitative, and the piston seat 61 and the piston head 62 may actually be selected from any suitable material, so that the piston 60 has sufficient heat resistance and ablation resistance and a high melting temperature, that is, the selected material enables the piston 60 to bear the friction heat between the piston 60 and the pretensioning pipe 30 and the high temperature of the powder during the working process, so that the contact surface between the piston 60 and the pretensioning pipe 30 does not form gas leak caused by heat or ablation.

Further preferably, the piston seat 61 is dimensioned such that the piston seat 61 has a substantially cylindrical shape, the diameter of the piston seat 61 is greater than that of the inner wall 31 of the pretensioning pipe 30 such that the piston seat 61 forms an interference fit with the pretensioning pipe 30, and the ratio of the length to the diameter of the piston seat 61 is greater than or equal to 0.8, more preferably greater than or equal to 1, such that the piston 60 has a sufficient contact surface with the inner wall 31 of the pretensioning pipe 30 when being forced to move in the direction opposite to the pretensioning direction, thereby providing resistance through friction force to make the piston 60 to be hardly retracted.

### Second Embodiment

It is conceivable that different embodiments of the piston 60 according to the present invention have a similar overall construction. Therefore, in the descriptions of other embodiments, the same parts as those of the embodiments already described will not be repeated.

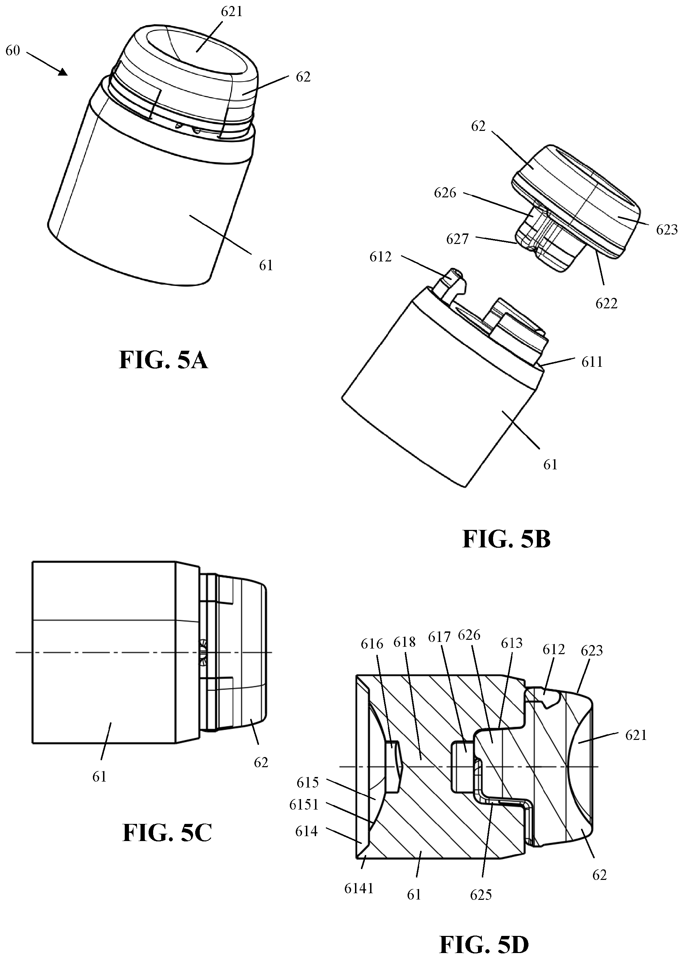

As shown in FIGs. 5A to 5D, in the second embodiment, the difference from the first embodiment lies in that the piston head 62 comprises a supporting portion 626 protruding rearwardly from the abutting surface 622 and abutting against the first recess 613 of the piston seat 61. More specifically, the supporting portion 626 extends completely into the first recess 613 to tightly abut against and support the inner wall of the first recess 613. The arrangement of the supporting portion 626 ensures a more stable assembly between the piston head 62 and the piston seat 61, thereby ensuring a stable movement of the piston 60 in the pretensioning pipe 30, and preventing the piston 60 from flipping or bouncing during movement.

In this configuration, the at least one second passage 625 delimited by the piston head 62 is, for example, a groove formed along the edge of the piston head 62, and the groove extends from the end surface 627 of the supporting portion 626 facing the first passage outlet 617 to the side wall surface 623, so that the gas flow reaching the first recess 613 is directed from the supporting portion 626 to the side wall surface 623 of the piston head 62 and is ejected toward the inner wall 31 of the pretensioning pipe 30, and then flows toward the front of the piston 60.

### Third Embodiment

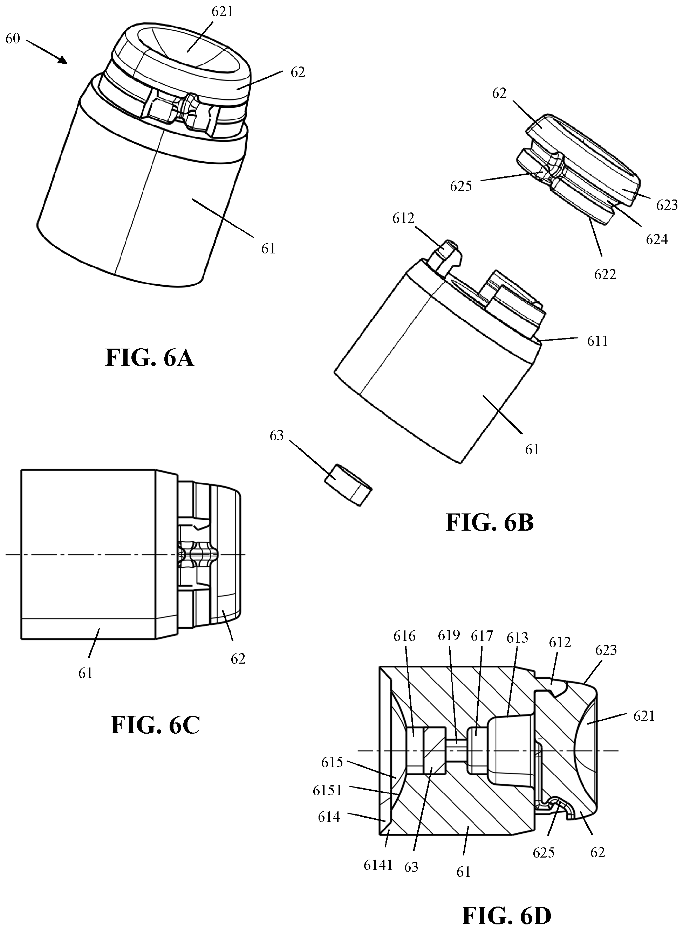

As shown in FIGs. 6A to 6D, in the third embodiment, the difference from the first embodiment lies in that the first passage of the pressure control mechanism of the piston 60 comprises a first passage inlet 616 recessed forwardly from the bottom of the middle portion 615 of the third recess of the piston seat 61, a first passage outlet 617 recessed rearwardly from the bottom of the first recess 613 of the piston seat 61, and a connecting passage 619 connecting the first passage inlet 616 to the first passage outlet 617. Thus, the first passage communicates the middle portion 615 of the third recess to the first recess 613.

In addition, the pressure control mechanism further comprises a blocking member 63 arranged in the first passage, and the blocking member 63 may be arranged in the first passage inlet 616 as shown, or may be arranged in the first passage outlet 617 or in the connecting passage 619. The blocking member 63 is a plastic member or a metal member, and plays a similar role as the blocking portion 618 in the first embodiment, that is, the blocking member 63 forms a partition-like structure in the piston seat 61 that can be broken under a preset pressure and temperature. More specifically, when the gas pressure on the rear side of the piston seat 61 (i.e., the gas pressure in the third recess) is less than the preset value, the blocking member 63 can close the first passage to block the gas flow from flowing forward; when the gas pressure on the rear side of the piston seat 61 is greater than or equal to the preset value, the blocking member 63 can be broken through a fragile region such as a weakened portion and a tear line provided thereon to open the first passage, so that the gas flow on the rear side of the piston seat 61 reaches the first recess 613 through the first passage. The shape, material, broken mode and the like of the blocking member 63 are not limited in the present invention.

### Fourth Embodiment

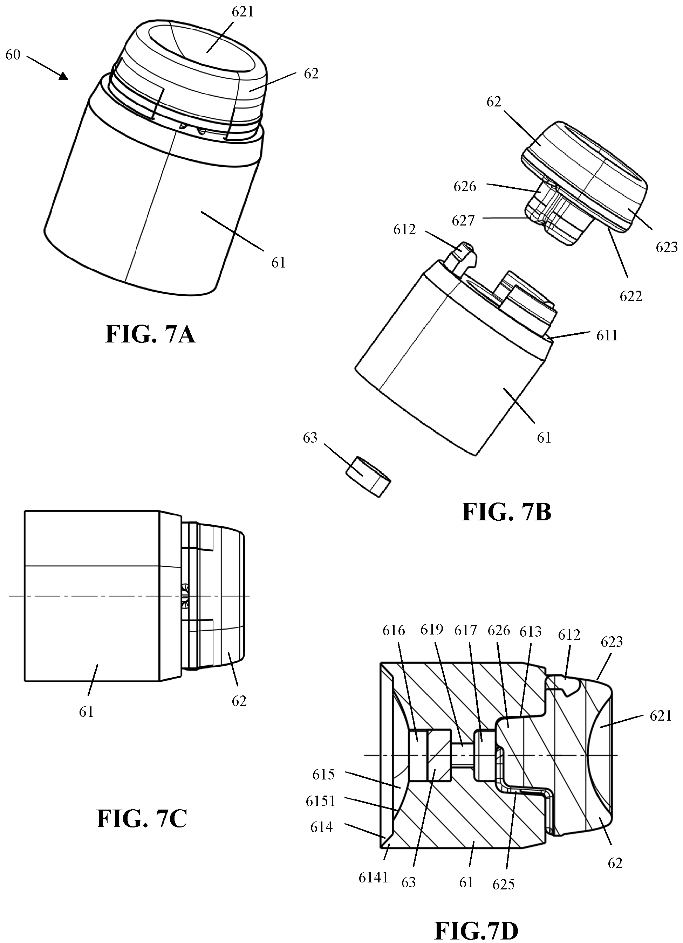

As shown in FIGs. 7A to 7D, in the fourth embodiment, the difference from the third embodiment lies in that the structure of the piston head 62 is similar to that of the second embodiment, that is, the piston head 62 comprises a supporting portion 626 protruding rearwardly from the abutting surface 622 and abutting against the first recess 613 of the piston seat 61, and the groove forming the second passage 625 directs the gas flow reaching the first recess 613 from the supporting portion 626 to the side wall surface 623 of the piston head 62. For details, please refer to the second embodiment, and the details are not described herein again.

### Fifth Embodiment

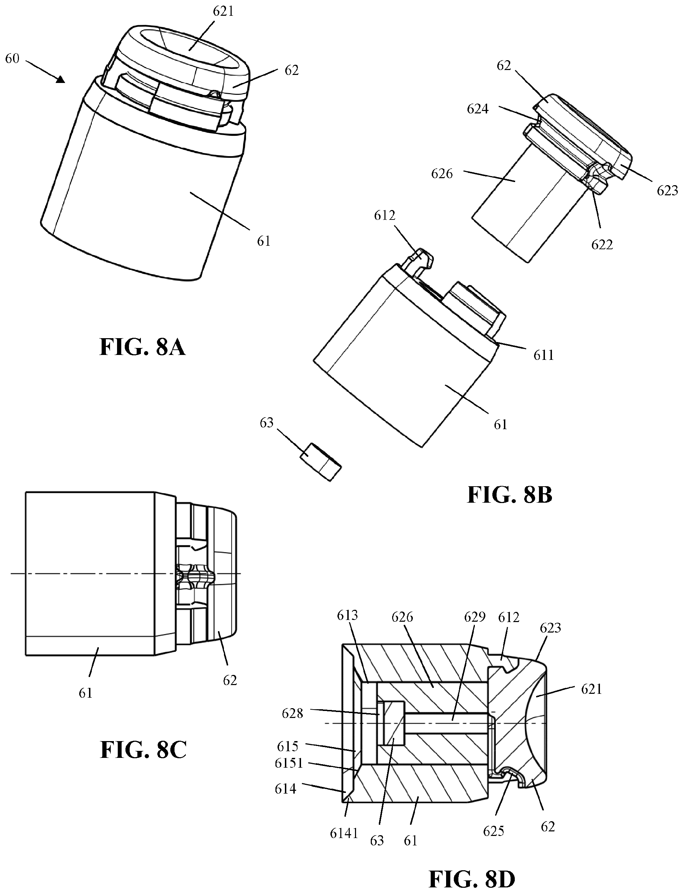

As shown in FIGs. 8A to 8D, in the fifth embodiment, the difference from the fourth embodiment lies in the arrangement of the first passage, that is, both the first passage and the second passage 625 are arranged in the piston head 62.

More specifically, in the piston seat 61, the first recess 613 communicates the front surface 611 to the middle portion 615 of the third recess, and the supporting portion 626 of the piston head 62 extends completely into the first recess 613 toward the middle portion 615 to tightly abut against and support the inner wall of the first recess 613. In the fifth embodiment, the first passage of the pressure control mechanism of the piston 60 is arranged in the supporting portion 626 of the piston head 62. More specifically, the supporting portion 626 delimits the first passage communicating the third recess of the piston seat 61 to the substantially central position of the abutting surface 622 of the piston head 62, and the first passage comprises an inlet section 628 and a connecting section 629 communicating the inlet section 628 to the substantially central position of the abutting surface 622. The blocking member 63 may be arranged in the inlet section 628 as shown, or may be arranged in the connecting section 629.

When the gas pressure on the rear side of the piston seat 61 (i.e., the gas pressure in the third recess) is less than the preset value, the blocking member 63 can close the first passage to block the gas flow from flowing forward; and when the gas pressure on the rear side of the piston seat 61 is greater than or equal to the preset value, the blocking member 63 can be broken through a fragile region such as a weakened portion and a tear line provided thereon to open the first passage, so as to direct the gas flow on the rear side of the piston seat 61 to the substantially central position of the abutting surface 622 through the first passage. It is conceivable that the first passage may also be configured in a form similar to the first embodiment, that is, the blocking member 63 may be replaced by a blocking portion integrally formed in the piston head 62 to reduce the number of parts.

In addition, the at least one second passage 625 delimited by the piston head 62 is communicated to the first passage at the end of the connecting section 629, and directs the gas flow reaching the position of the abutting surface 622 from the substantially central position of the abutting surface 622 to the side wall surface 623 of the piston head 62, and the gas flow is ejected toward the inner wall 31 of the pretensioning pipe 30, and then flows toward the front of the piston 60.

From the above detailed description of a plurality of non-exhaustive embodiments, it can be seen that the piston 60 according to the present invention has a simple overall structure with a small number of parts, and its assembly process is simple and reliable, so that its production, process and quality costs are low. When pretensioning is applied, the piston 60 has good sealing performance to ensure gas sealing and energy transmission, and meanwhile being able to balance the response rate of power transmission so as to reduce hysteresis. When the pretensioning device reaches the extreme working condition, in order to ensure the safety of the pretensioning device and prevent the pretensioning pipe 30 from bursting, the piston can release the high-temperature and high-pressure gas flow in the pretensioning pipe 30, while effectively avoiding damage by open flame, high-energy particles and the like to the vehicle interiors and avoiding injury to occupants.

It should be noted that the present invention (e.g., inventive concepts, etc.) has been described in the description of this patent document and/or illustrated in the drawings according to exemplary embodiments; the embodiments of the present invention are intended to be illustrative only by way of example, and not to limit the protection scope of the invention. The structure and/or arrangement of elements of the inventive concepts embodied in the present invention and described in the description and/or illustrated in the figures is merely illustrative. Although exemplary embodiments of the present invention have been described in detail in this patent document, it will be apparent to those skilled in the art that equivalents, modifications, variations, etc. of the subject matter of the exemplary embodiments and alternative embodiments are possible and are considered to fall within the scope of the present invention; all of such subject matters (e.g., modifications, variations, embodiments, combinations, equivalents, etc.) are intended to be comprised within the scope of the present invention. It should also be noted that various other modifications, variations, replacements, equivalents, changes, omissions, etc. may be made in the configuration and/or arrangement of exemplary embodiments (e.g., in terms of concepts, designs, structures, devices, forms, assemblies, constructions, means, functions, systems, processes/methods, steps, sequences of process/method steps, operations, operating conditions, properties, materials, compositions, combinations, etc.) without departing from the scope of the present invention; all of such subject matters (e.g., modifications, variations, embodiments, combinations, equivalents, etc.) are intended to be comprised within the scope of the present invention. The scope of the present invention is not intended to be limited to the description of this patent document and/or the subject matter described in the figures (e.g., details, structures, functions, materials, acts, steps, sequences, systems, results, etc.). The claims of this patent document shall be appropriately interpreted to cover the entire scope of the subject matter of the present invention (e.g., including any of and all of such modifications, variations, embodiments, combinations, equivalents, etc.). It is conceivable that the terms used in this patent document are intended to provide the description of the subject matter of the exemplary embodiments and are not intended to limit the scope of the present invention.

It should also be noted that, according to exemplary embodiments, the present invention may comprise conventional techniques (e.g., techniques implemented and/or integrated in exemplary embodiments, modifications, variations, combinations, equivalents), or may comprise any other suitable techniques (at current and/or in the future) having the ability to perform the functions and processes/operations described in the description and/or illustrated in the figures. All of such techniques (e.g., techniques implemented in embodiments, modifications, variations, combinations, equivalents, etc.) are considered to fall within the scope of the present invention of this patent document.

## Claims

1. A piston (60) for a pretensioning seatbelt, comprising:
a piston seat (61) comprising a front surface (611) and a first recess (613) recessed from the front surface (611); and
a piston head (62) mounted to a front side of the piston seat (61) and comprising an abutting surface (622) abutting against the front surface (611), a front side of the piston head (62) being provided with a second recess (621) adapted to support a transmission member;
wherein the piston (60) is provided with a pressure control mechanism configured to block gas flow from flowing forward when gas pressure on a rear side of the piston seat (61) is less than a preset value; and to form a gas flow passage when the gas pressure on the rear side of the piston seat (61) is greater than or equal to the preset value, the gas flow passage being adapted to deflect the gas flow and allow the gas flow to flow toward the front of the piston (60).

2. The piston (60) according to claim 1, wherein the piston seat (61) comprises at least one mounting portion (612) protruding from the front surface (611), and the piston head (62) comprises a mounting groove (624) snap-fitted with the at least one mounting portion (612).

3. The piston (60) according to claim 1, wherein the rear side of the piston seat (61) is provided with a third recess comprising a middle portion (615) and an edge portion (614) located outside the middle portion (615), the middle portion (615) defining a mounting surface (6151) adapted to fit against a mounting tool, and the edge portion (614) being recessed from an edge of the mounting surface (6151) to form a ring edge (6141) adapted to deform radially outward.

4. The piston (60) according to claim 3, wherein the mounting surface (6151) is a curved surface.

5. The piston (60) according to claim 3, wherein the pressure control mechanism comprises:
a first passage inlet (616) recessed from a bottom of the middle portion (615);
a first passage outlet (617) recessed from a bottom of the first recess (613); and
a blocking portion (618) located between the first passage inlet (616) and the first passage outlet (617), wherein the blocking portion (618) is configured to be broken so as to communicate the first passage inlet (616) to the first passage outlet (617) when the gas pressure in the third recess is greater than or equal to the preset value.

6. The piston (60) according to claim 3, wherein the pressure control mechanism comprises:
a first passage communicating the middle portion (615) to the first recess (613); and
a blocking member (63) arranged in the first passage, wherein the blocking member (63) is configured to close the first passage when the gas pressure in the third recess is less than the preset value, and to be broken so as to open the first passage when the gas pressure in the third recess is greater than or equal to the preset value.

7. The piston (60) according to claim 5 or 6, wherein the pressure control mechanism further comprises at least one second passage (625) delimited by the piston head (62) and configured to direct the gas flow in the first recess (613) from the abutting surface (622) to a side wall surface (623) of the piston head (62).

8. The piston (60) according to claim 5 or 6, wherein the piston head (62) comprises a supporting portion (626) protruding from the abutting surface (622) and abutting against the first recess (613), and the pressure control mechanism further comprises at least one second passage (625) delimited by the piston head (62) and configured to direct the gas flow in the first recess (613) from the supporting portion (626) to a side wall surface (623) of the piston head (62).

9. The piston (60) according to claim 3, wherein the first recess (613) communicates the front surface (611) to the middle portion (615), and the piston head (62) comprises a supporting portion (626) protruding from the abutting surface (622) and abutting against an inner wall of the first recess (613), wherein the pressure control mechanism comprises:
a first passage delimited by the supporting portion (626) and configured to be closed when the gas pressure in the third recess is less than the preset value, and to be opened to direct the gas flow from the third recess to the position of the abutting surface (622) when the gas pressure in the third recess is greater than or equal to the preset value; and
at least one second passage (625) configured to be communicated with the first passage and to direct the gas flow from the position of the abutting surface (622) to a side wall surface (623) of the piston head (62).

10. The piston (60) according to claim 1, wherein the pressure control mechanism is configured such that an angle between a direction of the gas flow output from the gas flow passage and an axial direction of the piston (60) is between 20 ° and 90 °.

11. The piston (60) according to claim 1, wherein the piston seat (61) is made of a first plastic material, and the piston head (62) is made of a second plastic material having a hardness greater than that of the first plastic material.

12. A seatbelt retractor, comprising:
a bracket (10);
a spool assembly (20) rotatably mounted to the bracket (10) and comprising a spool (21) adapted to wind a webbing and a gear (22) fixedly connected to the spool (21);
a pretensioning pipe (30) mounted to the bracket (10);
a gas generator (50) mounted in the pretensioning pipe (30); and
at least one piston (60) according to any one of claims 1 to 11 and at least one transmission member arranged in the pretensioning pipe (30), the piston (60) being arranged between the gas generator (50) and the transmission member, and the piston seat (61) being in interference fit with an inner wall (31) of the pretensioning pipe (30),
wherein the seatbelt retractor is configured to generate a gas flow when the gas generator (50) is ignited to push the piston (60) and the transmission member to move in the pretensioning pipe (30), so that the transmission member interacts with the gear (22) and drives the spool (21) to rotate.

13. A pretensioning seatbelt, comprising the seatbelt retractor according to claim 12.
